**Europäisches Patentamt**

**European Patent Office**

**Office européen des brevets**

(19)

(11) Numéro de publication : **0 239 515 B1**

## (12) FASCICULE DE BREVET EUROPEEN

(45) Date de publication du fascicule du brevet :
**27.11.91 Bulletin 91/48**

(51) Int. Cl.⁵ : **A01D 34/66**

(21) Numéro de dépôt : **87440011.2**

(22) Date de dépôt : **26.02.87**

(54) **Faucheuse rotative.**

Demande divisionnaire 90117440.9 déposée le 26/02/87.

(30) Priorité : **27.02.86 FR 8602899**

(43) Date de publication de la demande :
**30.09.87 Bulletin 87/40**

(45) Mention de la délivrance du brevet :
**27.11.91 Bulletin 91/48**

(84) Etats contractants désignés :
**AT BE DE ES FR GB IT NL SE**

(56) Documents cités :
**EP-A- 0 126 518**
**EP-A- 0 171 341**
**FR-A- 2 351 580**
**GB-A- 2 059 236**
**US-A- 1 536 514**
**US-A- 2 625 784**

(73) Titulaire : **KUHN S.A.**
**4, Impasse des Fabriques**
**F-67700 Saverne (FR)**

(72) Inventeur : **Ermacora, Rino**
**5, rue de Monswiller§Ottersthal**
**F-67700 Saverne (FR)**
Inventeur : **Neuerburg, Horst**
**6, rue des Aubépines**
**F-67700 Saverne (FR)**

Jouve, 18, rue Saint-Denis, 75001 PARIS

## Description

La présente invention concerne une faucheuse comportant des organes de coupe rotatifs munis d'au moins un outil de coupe, au moins un desdits organes de coupe rotatifs étant entraîné par des moyens de transmission logés dans un carter s'étendant sous lesdits organes de coupe rotatifs, ledit carter étant notamment constitué de modules dans lesquels sont guidés en rotation quelques uns au moins desdits organes de coupe rotatifs, lesdits modules présentant une bride à chacune de leurs extrémités, permettant de les lier l'un à l'autre au moyen d'organes d'assemblage traversant lesdites brides.

Une telle faucheuse est décrite dans la EP-A-0 171 341. Cette faucheuse connue comporte un carter constitué notamment de modules dans lesquels sont guidés en rotation les organes de coupe rotatifs. Ces modules comportent, à chacune de leurs extrémités, une bride permettant de les lier l'un à l'autre au moyen de boulons d'assemblage traversant lesdites brides.

Cette faucheuse connue a l'avantage d'avoir un carter d'une construction très intéressante. En effet, le caractère modulaire de la construction du carter permet de fabriquer des faucheuses de largeur de travail différente, tout en réduisant, voire en supprimant les pièces spécifiques à chaque largeur de travail. La production de telles faucheuses est donc très facile et permet de proposer toute une gamme de faucheuses à un coût très intéressant.

En pratique, il s'est cependant avéré que les brides des modules constituant le carter de cette faucheuse connue avaient une tenue trop faible compte tenu des sollicitations auxquelles elles étaient soumises pendant le travail et le transport.

Il était également apparu des problèmes au niveau des boulons d'assemblage qui n'étaient pas non plus capables de résister aux efforts de traction qui agissaient sur eux.

Partant de cette faucheuse connue, le but de la présente invention consiste à améliorer la forme des brides de telle sorte qu'elles présentent une bonne résistance aux sollicitations à absorber, tout en permettant parallèlement une augmentation de la tenue des organes d'assemblage et tout en étant compatible avec les impératifs de fonderie.

A cet effet, la faucheuse selon la présente invention est caractérisée par le fait que chaque bride est, en partie au moins, formée par deux ailes espacées l'une de l'autre suivant l'axe longitudinal du carter et dirigées transversalement à cet axe longitudinal, ces deux ailes étant liées entre elles par au moins une aile de raccord dirigée transversalement par rapport à celles-ci et raccordée au corps du module.

Grâce à cette forme très particulière, les brides des modules de la faucheuse selon la présente invention répondent de manière tout à fait étonnante au but fixé. En effet, grâce à l'agencement des différentes ailes, lesdites brides peuvent être parfaitement réalisées en fonderie avec une structure très saine. Ces brides possèdent ensuite une remarquable tenue aux sollicitations auxquelles elles sont appelées à être soumises. Ceci est en effet dû au fait que chaque bride comporte en partie au moins, deux ailes qui sont espacées l'une de l'autre suivant une direction longitudinale du carter et dont la distance qui les sépare, est parfaitement maintenue par au moins une aile de raccord liée au corps du module correspondant. Les efforts auxquels sont soumises lesdites brides sont ainsi parfaitement transmis au corps du module correspondant. Enfin, le fait que les deux ailes de chaque bride soient espacées l'une de l'autre dans une direction longitudinale du carter, a également permis d'augmenter la longueur des organes d'assemblage pour qu'ils puissent parfaitement résister aux sollicitations auxquelles ils sont soumis.

Selon une caractéristique supplémentaire de l'invention, il est prévu, qu'en vue de dessus, les ailes de chaque bride s'étendent au moins sensiblement perpendiculairement à l'axe longitudinal du carter.

Selon une autre caractéristique supplémentaire de l'invention, il est prévu que les ailes de chaque bride s'étendent sensiblement verticalement.

Selon une autre caractéristique supplémentaire de l'invention, il est aussi prévu que l'aile de raccord ou les ailes de raccord de chaque bride s'étendent sensiblement horizontalement.

Dans l'invention, il pourra par ailleurs être prévu que les deux ailes de chaque bride soient liées entre elles par deux ailes de raccord dont l'une s'étend à la partie supérieure et l'autre à la partie inférieure desdites ailes. Les organes d'assemblage, quant à eux, s'étendront entre les deux ailes de raccord.

Dans ce cas, un agencement très avantageux sera obtenu lorsqu'en vue dans une direction horizontale et perpendiculaire à l'axe longitudinal du carter, les brides ont à l'avant et à l'arrière une forme de tube à section sensiblement quadrilatérale.

Dans l'invention, il pourra également être avantageusement prévu que l'axe commun des trous avant aménagés dans les deux ailes de chaque bride, et l'axe commun des trous arrière également aménagés dans lesdites ailes, s'étendent au moins sensiblement dans le voisinage du plan médian horizontal de la surface de contact de ladite bride.

Ces organes d'assemblage seront chacun avantageusement formés par un tirant, deux rondelles et un écrou.

Afin d'augmenter la surface de la face d'appui de l'aile de chaque bride qui sert d'appui à une rondelle, ladite face d'appui présente, au niveau de chaque rondelle, avantageusement la forme d'une portion de surface cylindrique. De même, la face de la rondelle destinée à venir en contact avec cette face d'appui, a également la forme d'une portion de surface cylindrique de dimension au moins sensiblement identique à celle de ladite face d'appui. Préférentiellement, l'incurvation de ladite face d'appui sera dirigée vers l'autre aile de la bride respective servant de face de contact entre deux modules adjacents. De cette sorte, il est possible d'effectuer un usinage très soigné de ladite face d'appui pour que le contact entre l'aile et la rondelle correspondante soit optimal. On garantit ainsi également une bonne tenue du carter après assemblage des différents modules entre eux.

Le blocage de la rotation de l'écrou d'un organe d'assemblage pourra être réalisé automatiquement lors du vissage ou du dévissage du tirant, lorsque le module présente au moins une partie contre laquelle au moins un côté de l'écrou puisse venir en appui. De cette sorte, il n'est pas nécessaire d'utiliser un outil pour bloquer l'écrou, ce qui facilitera d'autant l'opération d'assemblage des modules entre eux.

Afin que ce blocage soit parfaitement réalisé, tout en laissant un jeu entre le côté de l'écrou et la partie concernée du module, compatible avec les tolérances de fonderie, l'écrou a de préférence une forme carrée. Le côté de l'écrou qui vient en contact avec la partie du module prévue à cet effet, a ainsi une longueur relativement grande de sorte que le blocage de la rotation de l'écrou soit toujours correctement réalisé.

Le carter de la barre de coupe pourra garder toute sa compacité sans qu'on agisse pour autant au détriment de la facilité du montage, s'il est prévu que la tête du tirant soit ronde et comporte un logement central à six pans. La rotation de la tête du tirant ne nécessite, de ce fait, pas un espace plus important que l'encombrement de ladite tête. Il est du reste très facile d'accéder à la tête du tirant avec un outil tel qu'une visseuse pneumatique par exemple.

Lorsque les modules sont chacun constitués, d'une manière connue en soi, d'un boîtier dans lequel est guidé en rotation un organe de coupe, et d'une entretoise s'étendant entre ce boîtier et le boîtier d'un module voisin, il pourra être avantageusement prévu que cette entretoise soit formée, sur une partie au moins de sa longueur, par un profil tubulaire à la partie arrière duquel est raccordée au moins une aile de rigidification dirigée au moins sensiblement parallèlement à l'axe longitudinal du carter. Il sera en sus prévu que cette aile de rigidification ou l'une de ces ailes de rigidification soit, en partie au moins, la continuité de la partie arrière de l'aile de raccord ou de l'une des ailes de raccord des brides dudit module.

Préférentiellement, il sera prévu qu'une aile de rigidification soit raccordée à la partie supérieure du profil tubulaire de l'entretoise et que cette aile de rigidification supérieure soit, en partie au moins, la continuité de la partie arrière de l'aile de raccord supérieure des brides du module. Le bord arrière de l'aile de rigidification supérieure pourra également être avantageusement sensiblement colinéaire avec le bord arrière de l'aile de raccord supérieure des brides.

Il pourra, du reste, également être prévu qu'une aile de rigidification soit raccordée à la partie inférieure du profil tubulaire de l'entretoise et que cette aile de rigidification soit, en partie au moins, la continuité de la partie arrière de l'aile de raccord inférieure des brides du module.

Selon une autre caractéristique supplémentaire, il pourra être prévu que les organes d'assemblage arrière s'étendent, en vue de dessus, au moins sensiblement entièrement sous les ailes de raccord supérieures et sous l'aile de rigidification supérieure des modules correspondants. Les organes d'assemblage l'arrière sont ainsi bien intégrés dans le gabarit du carter.

L'invention sera parfaitement comprise à la lumière de la description ci-dessous d'un exemple non limitatif de réalisation de celle-ci représenté sur le dessin annexé sur lequel :

– la figure 1 représente une vue de dessus de la barre de coupe d'une faucheuse selon l'invention,

– la figure 2 représente une vue de dessus à une échelle agrandie et partiellement coupée suivant le plan II (figure 3) de la barre de coupe de la figure 1 sans organes de coupe,

– la figure 3 représente une vue en coupe suivant le plan III (figure 2) de la barre de coupe de la figure 2,

– la figure 4 représente une vue en coupe suivant le plan IV (figure 2) de la barre de coupe de la figure 2,

– la figure 5 représente une vue en coupe suivant le plan V (figure 2) de la barre de coupe de la figure 2, et

– la figure 6 représente une vue en coupe suivant le plan VI (figure 2) de la barre de coupe de la figure 2.

Avant de commencer la description des différentes figures, il y a lieu de faire observer que celle-ci est faite en admettant que la barre de coupe de la faucheuse repose, comme pendant le travail, sur un plan horizontal. Les notions d'horizontalité et de verticalité sont donc clairement définies. Du reste, le dessus de la barre de coupe sera le côté de celle-ci où s'étendent les organes de coupe. Les expressions "sur", "sous", "dessus", "dessous", "supérieur", "inférieur" sont donc également clairement définies. Enfin, l'avant de la barre de coupe est le côté de celle-ci où les organes de coupe doivent couper le produit à récolter durant l'utilisation de la faucheuse. Les expressions "avant", "arrière", "devant", "derrière" sont de ce fait aussi clairement définies.

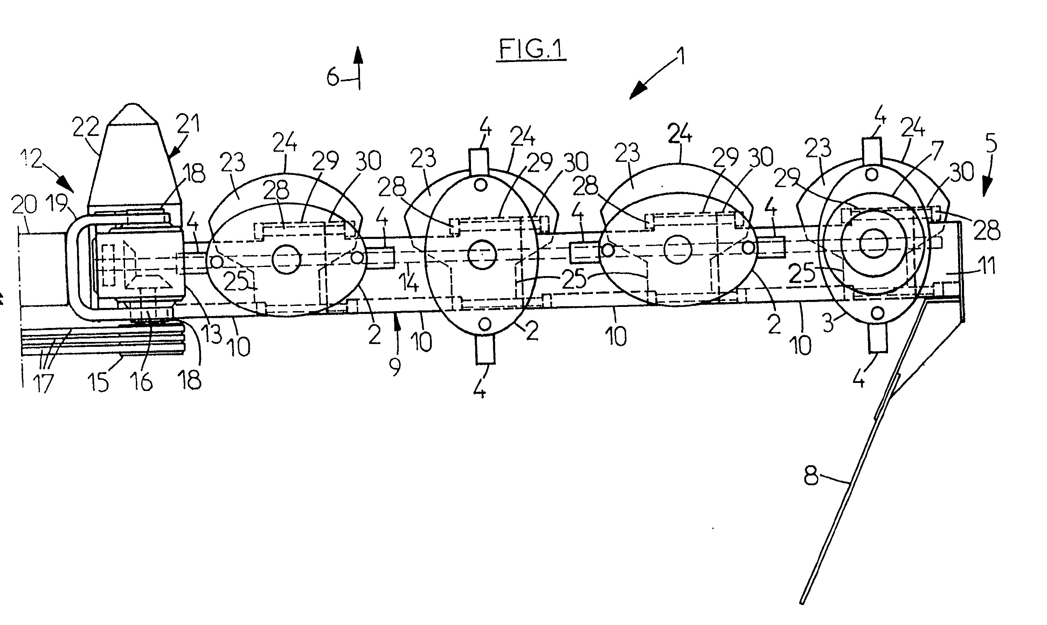

Sur la figure 1, est représentée une faucheuse selon l'invention ou plus précisément la barre de coupe (1) de celle-ci. Cette barre de coupe (1) comporte de manière non limitative quatre organes de coupe (2, 3) tournant chacun autour d'un axe (37) dirigé vers le haut. Chaque organe de coupe (2 ; 3) est muni de deux outils de coupe (4) qui sont montés diamétralement opposés sur la bordure extérieure de l'organe de coupe (2 ; 3). De préférence, le montage des outils de coupe (4) sur les organes de coupe (2 ; 3) est réalisé de sorte que lesdits outils de coupe (4) s'étendent vers l'extérieur sous l'effet de la force centrifuge et qu'ils puissent pivoter vers l'arrière, lorsqu'ils rencontrent un obstacle lors de leur rotation. L'organe de coupe (3) situé à l'extrémité droite (5) de la barre de coupe (1), vue dans le sens de travail défini par la flèche (6), est surmonté d'une coiffe (7). Cette coiffe (7) collabore avec un dispositif de réduction de l'andain de produit coupé tel que la planche à andains (8) par exemple, de sorte que l'andain de produit coupé soit séparé du produit encore sur pied.

Les organes de coupe (2 ; 3) sont guidés en rotation dans un carter (9) disposé sous lesdits organes de coupe (2 ; 3). Ce carter (9) est tout d'abord formé par une succession de modules (10). A l'extrémité droite (5) de la barre de coupe (1), le carter (9) est ensuite muni d'un module d'extrémité (11) qui s'étend sensiblement jusqu'à la trajectoire extérieure décrite par l'organe de coupe (3) ou légèrement au-delà de ladite trajectoire. A l'extrémité gauche (12) de la barre de coupe (1), le carter (9) est enfin muni d'un carter de renvoi (13).

Dans le carter (9) sont logés des moyens de transmission (14), tels que par exemple un arbre de transmission qui collabore avec des roues dentées non représentées, en vue d'entraîner en rotation les organes de coupe (2 ; 3). L'entraînement en rotation de ces moyens de transmission (14) est réalisé par l'intermédiaire d'un mécanisme d'entraînement logé dans le carter de renvoi (13) et qui est connu de l'homme de l'art. Ce mécanisme d'entraînement reçoit le mouvement d'une poulie (15) calée sur l'axe (16). La poulie (15) est entraînée en rotation au moyen d'une autre poulie non représentée par l'intermédiaire de courroies (17). Cette autre poulie est, d'une manière connue de l'homme de l'art, entraînée par la prise de force d'un tracteur, non représenté, auquel est lié la faucheuse pendant l'utilisation, par l'intermédiaire d'un arbre à joints universels également non représenté.

Le carter de renvoi (13) comporte deux portées cylindriques (18) sensiblement concentriques avec l'axe (16) d'entrée dudit carter de renvoi (13). Ces portées cylindriques (18) supportent une chape (19) fixée à un châssis (20) par l'intermédiaire duquel la faucheuse est liée au tracteur. Avec cet agencement, la barre de coupe (1) peut suivre les dénivellations du sol en pivotant autour de l'axe géométrique des portées cylindriques (18) sans que les divers organes d'entraînement soient soumis à des contraintes supplémentaires. Par ailleurs, il est possible de pivoter la barre de coupe (1) dans une position sensiblement verticale pour réduire la largeur de la faucheuse au transport sur route.

A l'extrémité gauche (12) du carter (9) et sous celui-ci ou plus précisément sous le carter de renvoi (13), est agencé un sabot (21) qui a une partie avant (22) relevée comme l'avant d'un ski. Ce sabot (21) permet à la faucheuse de glisser sur le sol pendant le travail et d'éviter les accrochages de produit coupé au carter de renvoi (13).

A l'avant, sous chaque organe de coupe (2 ; 3), le carter (9) est muni de patins protecteurs (23). Ces patins protecteurs (23) comportent une partie frontale (24) présentant, en vue de dessus, une forme sensiblement circulaire dont le rayon est plus grand que le rayon de la trajectoire extrême des organes de coupe (2 ; 3) mais plus petit que le rayon de la trajectoire extrême des outils de coupe (4). Par ailleurs, lesdits patins protecteurs (23) comportent une partie arrière (25), en forme de patin, sur laquelle repose également la barre de coupe (1) pendant le travail.

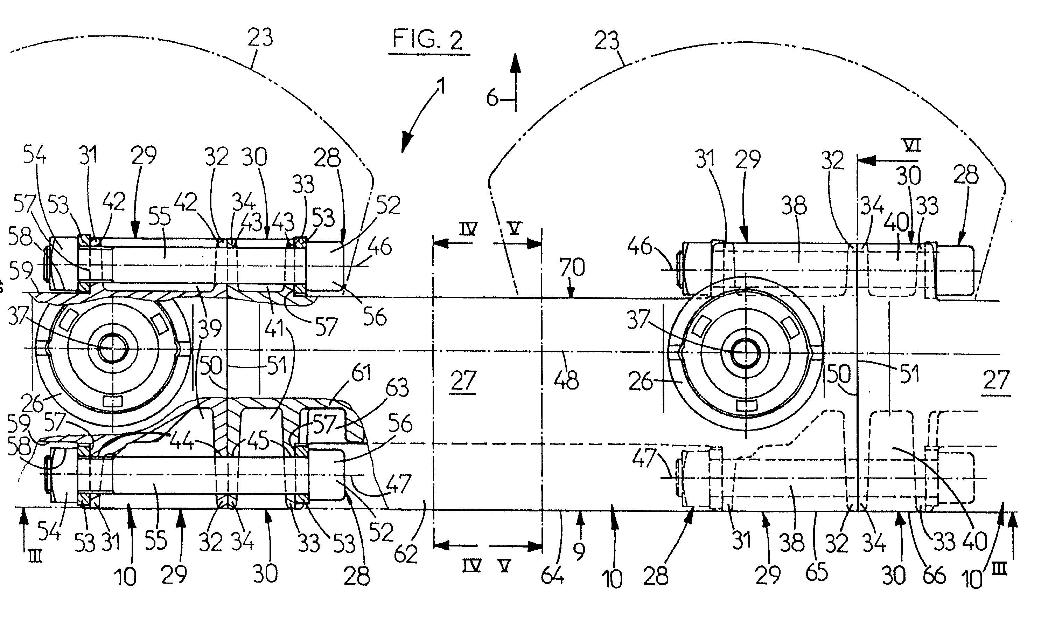

Sur les figures 2 à 6, on voit plus précisément l'agencement de la liaison entre les différents modules (10) du carter (9) de la barre de coupe (1).

Ces modules (10) se composent d'un boîtier (26) dans lequel est guidé en rotation l'organe de coupe (2 ; 3) correspondant, et d'une entretoise (27) qui s'étend entre ce boîtier (26) et le boîtier (26) d'un module (10) adjacent.

Les différents modules (10) sont liés l'un à l'autre au moyen d'organes d'assemblage (28). Pour ce faire, chaque module (10) comporte, à chacune de ses extrémités, une bride (29, 30).

Les brides (29 ; 30) de deux modules (10) adjacents sont liées entre elles par les organes d'assemblage (28).

Selon l'invention, ces brides (29 ; 30) ont une structure très particulière. En effet, il est visible sur les différentes figures que les brides (29) comportent deux ailes (31, 32) et que les brides (30) comportent deux ailes (33, 34). Ces ailes (31, 32; 33, 34) des brides (29 ; 30) qui s'étendent à l'avant et à l'arrière des modules (10), sont dirigées transversalement à l'axe longitudinal (48) du carter (9), préférentiellement sensiblement dans la direction de travail (6) (c'est-à-dire, en vue de dessus, au moins sensiblement perpendiculairement à l'axe longitudinal (48) du carter (9)) et s'étendent sensiblement verticalement.

En sus, elles s'étendent à une certaine distance l'une de l'autre. Ainsi, la bride (29) située du côté du boîtier (26) d'un module (10), a son aile (31) située d'un côté du plan vertical (36) dirigé dans la direction de travail (6) et passant par l'axe de rotation (37) de l'organe de coupe (2 ; 3) guidé dans ledit boîtier (26), alors que l'autre aile (32) de la bride (29) est située de l'autre côté dudit plan vertical (36). De cette sorte, les sollicitations sont bien transmises dans le module (10) au niveau du boîtier (26) sans trop déformer ledit boîtier (26). Les ailes (33, 34) de la bride (30) située à l'extrémité de l'entretoise (27) éloignée du boîtier (26), s'étendent également a une certaine distance l'une de l'autre. La distance qui sépare les deux ailes (33, 34) de la bride (30), est néanmoins plus petite que la distance qui sépare les deux ailes (31, 32) de la bride (29). Ceci permet de loger aisément la partie frontale des brides (29 ; 30) ainsi que les organes d'assemblage (28) situés à l'avant sensiblement à l'intérieur des patins protecteurs (23) correspondants. On évite ainsi que des débris végétaux ne puissent rester accrochés aux-brides (29 ; 30) et aux organes d'assemblage (28).

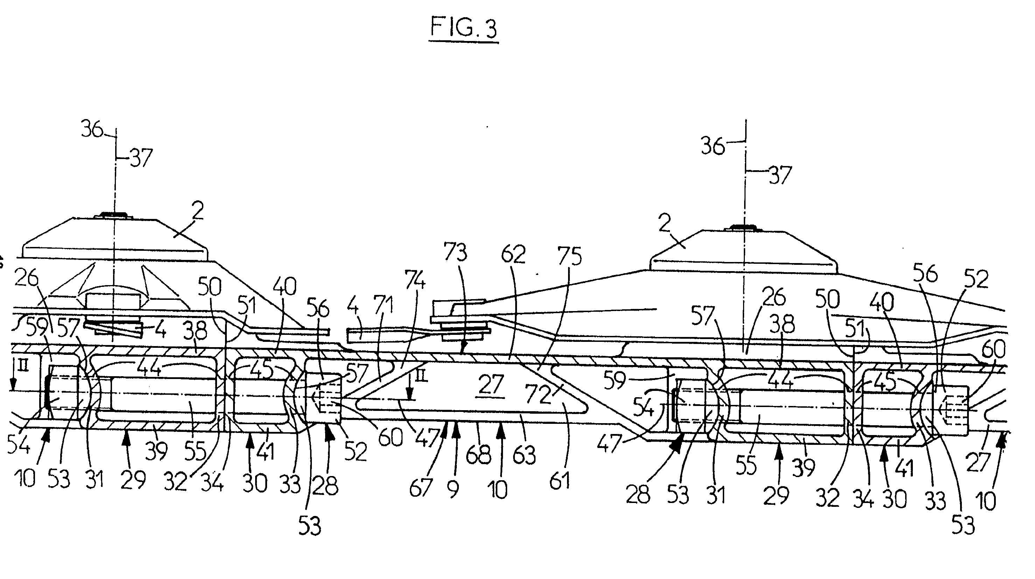

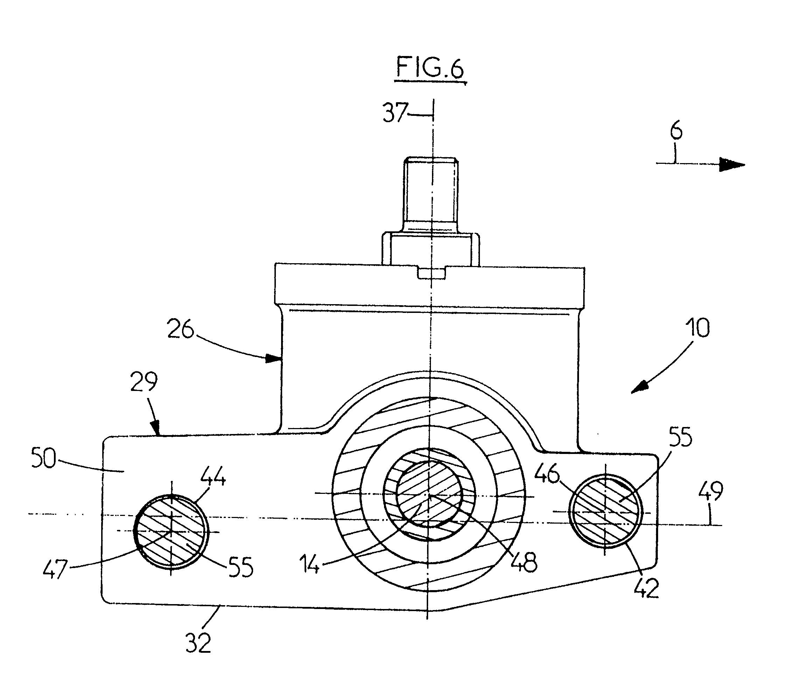

Sur les figures 2 et 3, on voit également que les brides (29 ; 30) se touchent par les ailes (32 ; 34) et que les ailes (31 ; 33) servent de faces d'appui aux organes d'assemblage (28). De cette sorte, les organes d'assemblage (28) peuvent avoir une longueur suffisante leur permettant de bien résister aux sollicitations auxquelles ils sont soumis et la face de contact (50 ; 51) de chaque aile (32 ; 34) peut avoir une surface suffisante pour ne pas être soumise au matage (figure 6), tout en ayant des brides (29 ; 30) qui peuvent être coulées de manière saine.

Les ailes (31, 32) des brides (29) sont liées entre elles par deux ailes de raccord (38, 39) et les ailes (33, 34) des brides (30) sont liées entre elles par deux ailes de raccord (40, 41). Ces ailes de raccord (38, 39 ; 40, 41) sont dirigées transversalement par rapport à la direction de travail (6) (c'est-à-dire, transversalement par rapport auxdites ailes (31, 32 ; 33 , 34)) et s'étendent sensiblement horizontalement. Elles sont en sus raccordées au corps du module (10). Les ailes de raccord (38 ; 40) s'étendent à la partie haute,des ailes (31, 32 ; 33, 34) tandis que les ailes de raccord (39 ; 41) s'étendent à la partie basse desdites ailes (31, 32 ; 33, 34). Ces ailes de raccord (38, 39 ; 40, 41) servent a limiter, de manière très importante, la flexion des ailes (31, 32 ; 33, 34) des brides (29 ; 30).

Avec cet agencement, les brides (29 ; 30) ont ainsi, à l'avant et à l'arrière, vues dans la direction de travail (6), une forme de tube à section sensiblement quadrilatérale.

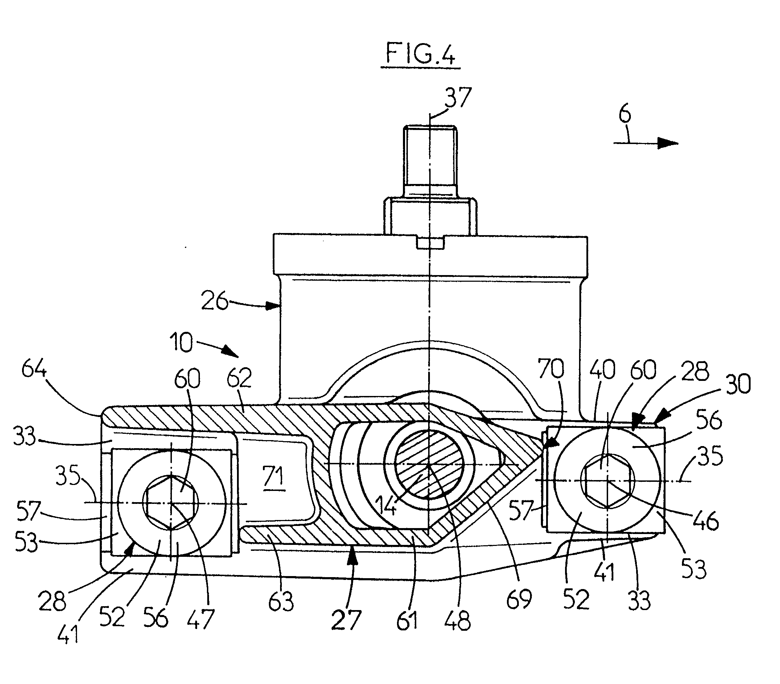

Les ailes (31, 32 ; 33, 34) des brides (29 ; 30) comportent à l'avant un trou (42 ; 43) et à l'arrière un trou (44 ; 45). Lesdits trous (42, 44 ; 43, 45) traversent les ailes (31, 32 ; 33, 34) de part en part. Comme visible sur les figures 2 et 3, les trous (42 ; 43) et (44 ; 45) sont coaxiaux. Sur les figures 4, 5 et 6, il apparaît en sus que l'axe commun (46) des trous avant (42 ; 43) et l'axe commun (47) des trous arrière (44 ; 45) s'étendent au moins sensiblement dans le voisinage du plan médian horizontal (49) de la face de contact (50 ; 51) des ailes (32 ; 34) des brides (29 ; 30).

Ces trous (42, 44 ; 43, 45) aménagés dans les ailes (31, 32 ; 33, 34) des brides (29 ; 30) sont traversés par les organes d'assemblage (28) qui s'étendent donc, vu dans la direction de travail (6) entre les deux ailes de raccord (38, 39 ; 40, 41) raccordant les ailes (31, 32 ; 33, 34) entre elles. Chaque organe d'assemblage (28) est constitué d'un tirant (52), de deux rondelles (53) et d'un écrou (54) vissé sur la tige (55) dudit tirant (52). Les rondelles (53) sont intercalées d'une part entre la tête (56) du tirant (52) et l'aile (33) de la bride (30) et d'autre part entre l'écrou (54) et l'aile (31) de la bride (29). Ces rondelles (53) sont avantageusement réalisées en acier, de préférence trempé, pour que la surface de contact entre la tête (56) du tirant (52) et la rondelle (53) correspondante de même que la surface de contact entre l'écrou (54) et la rondelle (53) correspondante puissent correctement résister à la pression engendrée par le serrage de l'écrou (54) sur le tirant (52) et par les sollicitations encaissées par le tirant (52) et l'écrou (54) pendant le travail ou le transport.

Comme les ailes (31 ; 33) des brides (29 ; 30) sont en fonte, on a, selon l'invention, augmenté la surface de la face d'appui (57) desdites ailes (31 ; 33) destinée à venir en contact avec les rondelles (53). Pour ce faire, la face d'appui (57) des ailes (31 ; 33) a la forme d'une portion de surface cylindrique. De même, la face de chaque rondelle (53) destinée à venir en contact avec ladite face d'appui (57) des ailes (31 ; 33), a également la forme d'une portion de surface cylindrique de dimension sensiblement identique à celle de la face d'appui (57).

Comme visible sur les figures 2 et 3, l'incurvation de la face d'appui (57) des ailes (31 ; 33), en forme de portion de surface cylindrique, est dirigée vers les ailes (32 ; 34) servant de face de contact entre deux modules (10) voisins. Ceci autorise la réalisation d'un usinage très soigné de la face d'appui (57) des ailes (31 ; 33) pour que le contact entre l'aile (31 ; 33) et la rondelle (53) respective soit optimal. On garantit ainsi une bonne tenue du carter (9) après assemblage des différents modules (10). Avantageusement, l'axe (35) de la portion de surface cylindrique qui forme la face d'appui (57) des ailes (31 ; 33) des brides (29 ; 30), s'étend sensiblement dans la direction de travail (6).

Etant donné que l'augmentation de la surface de la face d'appui (57) des ailes (31 ; 33) a été réalisée comme il vient d'être décrit plus haut, il a été possible de garder au carter (9) toute sa compacité.

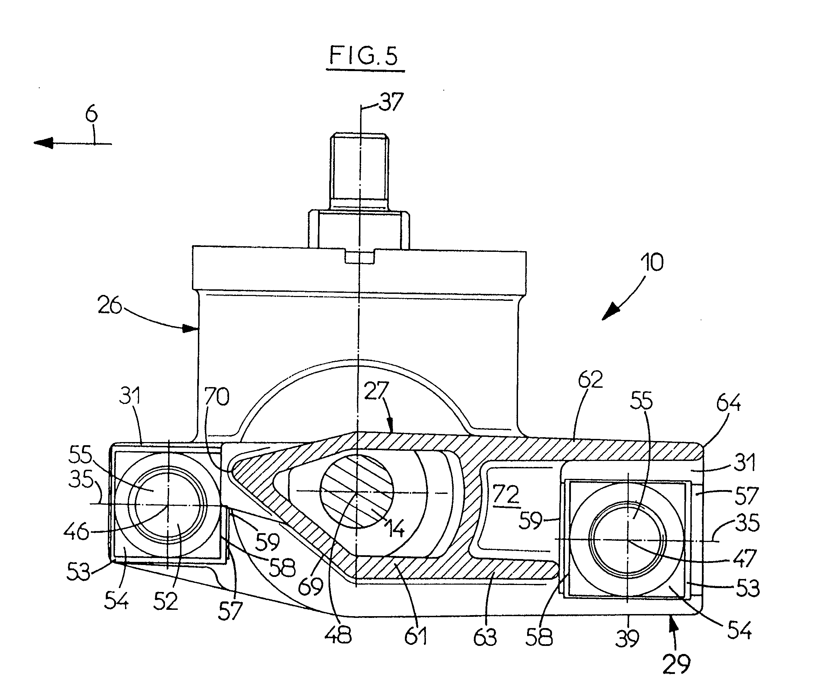

Sur les figures 2 et 5, on voit encore que l'un (58) des côtés de chaque écrou (54) s'étend dans le voisinage d'une partie (59) du module (10). Ceci permet de bloquer automatiquement la rotation de l'écrou (54) lors du vissage ou du dévissage, lorsque le côté (58) de l'écrou (54) vient buter sur la partie (59) du module (10). De cette sorte, il n'est pas nécessaire d'utiliser un outil pour réaliser ce blocage. Afin que le blocage soit effectivement réalisé, tout en laissant un certain jeu entre le côté (58) de l'écrou (54) et la partie (59) du module (10) compatible avec les tolérances générales de la fonderie, l'écrou (54) a avantageusement une forme carrée. Le côté (58) dudit écrou (54) a ainsi une longueur relativement grande, de sorte que le blocage soit toujours effectivement réalisé.

Sur les figures 3 et 4, on voit en sus que la tête (56) de chaque tirant (52) est avantageusement ronde et comporte un logement central à six pans (60). L'avantage de cet agencement apparaîtra ultérieurement.

Comme dit plus haut, le module (10) se compose d'un boîtier (26) dans lequel est guidé en rotation l'organe de coupe (2 ; 3) correspondant, et d'une entretoise (27) qui s'étend entre ce boîtier (26) et le boîtier (26) d'un module (10) adjacent.

Sur les figures 4, 5 et 6, on voit que l'entretoise (27) est formée, sur une partie au moins de sa longueur, par un profil tubulaire (61) qui entoure les moyens de transmission (14) logés dans le carter (9). A l'arrière, le profil tubulaire (61) est muni de deux ailes de rigidification (62, 63) dont l'une (62) se raccorde à la partie supérieure du profil tubulaire (61) et dont l'autre (63) se raccorde à la partie inférieure dudit profil tubulaire (61).

L'aile de rigidification supérieure (62) est plus large que l'aile de rigidification inférieure (63). Cela permet notamment de bien intégrer les organes d'assemblage (28), situés à l'arrière, dans le gabarit du carter (9) sans que la largeur et l'épaisseur du carter (9) ne deviennent trop importantes. Ceci est très important pour l'obtention d'une bonne qualité de coupe. On voit, en effet, que les organes d'assemblage arrière (28, 52, 53, 54) s'étendent, en vue de dessus, sensiblement entièrement sous les ailes de raccord supérieures (38 ; 40) et sous les ailes de rigidification supérieures (62). Avantageusement, la largeur de l'aile de rigidification supérieure (62) est sensiblement le double de la largeur de l'aile de rigidification inférieure (63). En sus, ces deux ailes de rigidification (62, 63) s'étendent transversalement à la direction de travail (6) (c'est-à-dire, au moins sensiblement parallèlement à l'axe longitudinal (48) du carter (9)) et sensiblement horizontalement. Du reste, il est encore visible sur les figures 2, 3, 4 et 5 que l'aile de rigidification supérieure (62) est en partie au moins la continuité de la partie arrière des ailes de raccord supérieures (38 ; 40) des brides (29 ; 30). La figure 2 montre en particulier que le bord arrière (64) de l'aile de rigidification supérieure (62) est sensiblement colinéaire avec le bord arrière (65 ; 66) des ailes de raccord supérieures (38 ; 40) des brides (29 ; 30).

L'aile de rigidification inférieure (63) est également, en partie au moins (notamment à ses extrémités), en continuité avec la partie arrière des ailes de raccord inférieures (39 ; 41) des brides (29 ; 30). Dans sa partie médiane (67), l'aile de rigidification inférieure (63) comporte un décrochement (68) en direction de l'aile de rigidification supérieure (62). L'espace entre ladite aile de rigidification inférieure (63) et le sol sur lequel glisse le carter (9) pendant le travail, est donc aussi très grand pour que la terre qui glisse le long de la face inférieure (69) du bord frontal (70) de l'entretoise (27), puisse passer aisément sous l'aile de rigidification inférieure (63). On évite ainsi des bourrages.

Afin d'augmenter la tenue du module (10), il est encore visible que les deux ailes de rigidification (62, 63) sont liée entre elles par des nervures (71, 72) dirigées transversalement à l'axe longitudinal (48) du carter (9). Comme visible sur la figure 3, les nervures (71, 72) s'étendent sensiblement à partir des extrémités de l'aile de rigidification inférieure (63), obliquement vers le haut en convergent vers la partie médiane (73) de l'aile de rigidification supérieure (62). Les points de raccord (74, 75) des nervures (71, 72) à l'aile de rigidification supérieure (62) sont sensiblement agencés au premier tiers et au second tiers de la longueur de l'aile de rigidification supérieure (62). Du reste, on voit encore que la largeur des nervures (71, 72) est sensiblement égale à la largeur de l'aile de rigidification inférieure (63) qui est la moins large.

Avec cet agencement, l'entretoise (27) du module (10) est très résistante, étant donné que les nervures (71, 72) forment une sorte de triangulation. Du reste, il est encore à noter que la réalisation des nervures (71, 72) est relativement aisée en fonderie.

Comme dit plus haut, les tirants (52) ont une tête (56) ronde gui est munie d'un logement central (60) à six pans. Ceci a permis de garder au carter (9) sa compacité, sans pour autant agir au détriment de la facilité du montage. Il est en effet très aisé d'accéder à la tête (56) du tirant (52) avec un outil tel qu'une visseuse pneumatique par exemple.

## Revendications

1. Faucheuse comportant des organes de coupe rotatifs (2-4 ; 3-4) muni d'au moins un outil de coupe (4), au moins un desdits organes de coupe rotatifs (2-4 ; 3-4) étant entraîné par des moyens de transmission (14) logés dans un carter (9) s'étendant sous lesdits organes de coupe rotatifs (2-4 ; 3-4), ledit carter (9) étant notamment constitué de modules (10) dans lesquels sont guidés en rotation quelques uns au moins desdits organes de coupe rotatifs (2-4 ; 3-4), lesdits modules (10) présentant une bride (29 ; 30) à chacune de leurs extrémités permettant de les lier l'un à l'autre au moyen d'organes d'assemblage (28, 52, 53, 54) traversant lesdites brides (29 ; 30), caractérisée par le fait que chaque bride (29 ; 30) est, en partie au moins, formée par deux ailes (31, 32 ; 33, 34) espacées l'une de l'autre suivant l'axe longitudinal (48) du carter (9) et dirigées transversalement à cet axe longitudinal (48), ces deux ailes (31, 32 ; 33, 34) étant liées entre elles par au moins une aile de raccord (38, 39 ; 40, 41) dirigée transversalement par rapport à celles-ci et raccordée au corps du module (10).

2. Faucheuse selon la revendication 1, caractérisée par le fait que, les ailes (31, 32 ; 33, 34) de chaque

bride (29 ; 30) s'étendent au moins sensiblement perpendiculairement à l'axe longitudinal (48) du carter (9).

3. Faucheuse selon la revendication 1 ou 2, caractérisée par le fait que les ailes (31, 32 ; 33, 34) de chaque bride (29 ; 30) s'étendent sensiblement verticalement.

4. Faucheuse selon l'une au moins des revendications 1 à 3, caractérisée par le fait que l'aile de raccord (38, 39 ; 40, 41) ou les ailes de raccord (38, 39 ; 40, 41) de chaque bride (29 ; 30) s'étendent sensiblement horizontalement.

5. Faucheuse selon l'une au moins des revendications 1 à 4, caractérisée par le fait que les deux ailes (31, 32 ; 33, 34) de chaque bride (29 ; 30) sont liées entre elles par deux ailes de raccord (38, 39 ; 40, 41) dont l'une (38 ; 40) s'étend à la partie supérieure et l'autre (39 ; 41) à la partie inférieure desdites ailes (31, 32 ; 33, 34), les organes d'assemblage (28, 52, 53, 54) s'étendant entre ces deux ailes de raccord (38, 39 ; 40, 41).

6. Faucheuse selon la revendication 5, caractérisée par le fait qu'en vue dans une direction horizontale et perpendiculaire à l'axe longitudinal (48) du carter (9), les brides (29 ; 30) ont à l'avant et à l'arrière une forme de tube à section sensiblement quadrilatérale.

7. Faucheuse selon l'une au moins des revendications 1 à 6, caractérisée par le fait que les deux ailes (31, 32 ; 33, 34) de chaque bride (29 ; 30) sont munies à l'avant et à l'arrière d'un trou (42 ; 43) respectivement (44 ; 45), lesdits trous (42, 44 ; 43, 45) servant au passage des organes d'assemblage (28, 52, 53, 54), l'axe commun (46) des trous avant (42 ; 43) et l'axe commun (47) des trous arrière (44 ; 45) s'étendant au moins sensiblement dans le voisinage du plan médian horizontal (49) de la surface de contact (50 ; 51) de ladite bride (29 ; 30).

8. Faucheuse selon l'une au moins des revendications 1 à 7, caractérisée par le fait que chaque organe d'assemblage (28) se compose d'un tirant (52), de deux rondelles (53) et d'un écrou (54).

9. Faucheuse selon la revendication 8, caractérisée par le fait que l'aile (31 ; 33) de chaque bride (29 ; 30), qui sert d'appui à une rondelle (53), a, au niveau de chaque rondelle (53), une face d'appui (57) en forme de portion de surface cylindrique, et que la face de la rondelle (53), destinée à venir en contact avec cette face d'appui (57), a également la forme d'une portion de surface cylindrique de dimension au moins sensiblement identique à celle de ladite face d'appui (57).

10. Faucheuse selon la revendication 9, caractérisée par le fait que l'incurvation de ladite face d'appui (57) en forme de portion de surface cylindrique est dirigée vers l'autre aile (32 ; 34) de la bride (29 ; 30) respective servant de face de contact (50 ; 51) entre deux modules (10) adjacents.

11. Faucheuse selon l'une des revendications 8 à 10, caractérisée par le fait qu'un module (10) comporte au moins une partie (59) contre laquelle vient en butée au moins un côté (58) de l'écrou (54) respectif, de sorte à bloquer la rotation de cet écrou (54) lors du vissage ou du dévissage du tirant (52).

12. Faucheuse selon la revendication 11, caractérisée par le fait que l'écrou (54) a une forme carrée.

13. Faucheuse selon l'une au moins des revendications 8 à 12, caractérisée par le fait que la tête (56) du tirant (52) est ronde et comporte un logement central (60) à six pans.

14. Faucheuse selon l'une au moins des revendications 1 à 13, caractérisée par le fait qu'un module (10) comporte, d'une manière connue en soi, un boîtier (26) dans lequel est guidé en rotation un organe de coupe (2-4 ; 3-4), et une entretoise (27) s'étendant entre ce boîtier (26) et le boîtier (26) d'un module (10) voisin, ladite entretoise (27) étant constituée, sur une partie au moins de sa longueur, par un profil tubulaire (61) à la partie arrière duquel est raccordée au moins une aile de rigidification (62 ; 63) dirigée au moins sensiblement parallèlement à l'axe longitudinal (48) du carter (9), et que cette aile de rigidification (62 ; 63) ou l'une des ailes de rigidification (62 ; 63) est, en partie au moins, la continuité de la partie arrière de l'aile de raccord (38 ; 40) ou de l'une des ailes de raccord (38 ; 40) des brides (29 ; 30).

15. Faucheuse selon la revendication 14, caractérisée par le fait qu'une aile de rigidification (62) est raccordée à la partie supérieure du profil tubulaire (61), et que cette aile de rigidification supérieure (62) est, en partie au moins, la continuité de la partie arrière de l'aile de raccord supérieure (38 ; 40) des brides (29 ; 30).

16. Faucheuse selon la revendication 15, caractérisée par le fait que le bord arrière (64) de l'aile de rigidification supérieure (62) est sensiblement colinéaire avec le bord arrière (65 ; 66) de l'aile de raccord supérieure (38 ; 40) des brides (29 ; 30).

17. Faucheuse selon la revendication 15 ou 16, caractérisée par le fait qu'une aile de rigidification (63) est raccordée à la partie inférieure du profil tubulaire (61), et que cette aile de rigidification inférieure (63) est, en partie au moins, la continuité de la partie arrière de l'aile de raccord inférieure (39 ; 41) des brides (29 ; 30).

18. Faucheuse selon l'une au moins des revendications 15 à 18, caractérisée par le fait que les organes d'assemblage arrière (28, 52, 53, 54) s'étendent, en vue de dessus, au moins sensiblement entièrement sous les ailes de raccord supérieures (38 ; 40) et sous l'aile de rigidification supérieure (62).

**Patentansprüche**

1. Mähmaschine mit rotierenden Schneidorganen (2-4; 3-4), die mit zumindest einem Schneidwerkzeug (4) versehen sind, wobei zumindest eines der rotierenden Schneidorgane (2-4; 3-4) durch Übertragungselemente (14) angetrieben ist, die in einem Gehäuse (9) untergebracht sind, das sich unter den rotierenden Schneidorganen (2-4; 3-4) erstreckt, welches Gehäuse (9) insbesonders aus Modulen (10) besteht, in welchen zumindest einige der rotierenden Schneidorgane (2-4; 3-4) drehbar geführt sind, wobei die Module (10) einen Flansch (29; 30) an jedem ihrer Enden aufweisen, der es ermöglicht, sie miteinander durch die Flansche (29; 30) durchsetzende Verbindungselemente (28, 52, 53, 54) zu verbinden, dadurch gekennzeichnet, dass jeder Flansch (29; 30) zumindest teilweise aus zwei Flügeln (31, 32; 33, 34) gebildet ist, die entlang der Längsachse (48) des Gehäuses (9) einen Abstand voneinander haben und quer zu dieser Längsachse (48) gerichtet sind, welche beiden Flügel (31, 32; 33, 34) miteinander durch zumindest einen quer zu ihnen ausgerichteten und mit dem Körper des Moduls (10) verbundenen Verbindungsflügel (38, 39; 40, 41) verbunden sind.

2. Mähmaschine nach Anspruch 1, dadurch gekennzeichnet, dass sich die Flügel (31, 32; 33, 34) jedes Flansches (29; 30) zumindest im wesentlichen senkrecht zur Längsachse (48) des Gehäuses (9) erstrecken.

3. Mähmaschine nach Anspruch 1 oder 2, dadurch gekennzeichnet, dass sich die Flügel (31, 32; 33, 34) jedes Flansches (29; 30) im wesentlichen vertikal erstrecken.

4. Mähmaschine nach zumindest einem der Ansprüche 1 bis 3, dadurch gekennzeichnet, dass sich der Verbindungsflügel (38, 39; 40, 41) oder die Verbindungsflügel (38, 39; 40, 41) jedes Flansches (29; 30) im wesentlichen horizontal erstrecken.

5. Mähmaschine nach zumindest einem der Ansprüche 1 bis 4, dadurch gekennzeichnet, dass die beiden Flügel (31, 32; 33, 34) jedes Flansches (29; 30) miteinander durch zwei Verbindungsflügel (38, 39; 40, 41) verbunden sind, von denen sich der eine (38; 40) zum oberen Teil und der andere (39; 41) zum unteren Teil der Flügel (31, 32; 33, 34) erstreckt, wobei sich die Verbindungselemente (28, 52, 53, 54) zwischen diesen beiden Verbindungsflügeln (38, 39; 40; 41) erstrecken.

6. Mähmaschine nach Anspruch 5, dadurch gekennzeichnet, dass die Flansche (29; 30) bei Betrachtung in einer horizontalen und zur Längsachse (48) des Gehäuses (9) normalen Richtung vorne und hinten die Form eines Rohres mit im wesentlichen vierseitigem Querschnitt haben.

7. Mähmaschine nach zumindest einem der Ansprüche 1 bis 6, dadurch gekennzeichnet, dass die beiden Flügel (31, 32; 33, 34) jedes Flansches (29; 30) vorne und hinten mit einem Loch (42; 43) bzw. (44; 45) versehen sind, welche Löcher (42, 44; 43, 45) für den Durchtritt der Verbindungselemente (28, 52, 53, 54) dienen, wobei sich die gemeinsame Achse (46) der vorderen Löcher (42; 43) und die gemeinsame Achse (47) der hinteren Löcher (44; 45) zumindest im wesentlichen in der Nähe der horizontalen Mittelebene (49) der Kontaktfläche (50; 51) des Flansches (29; 30) erstrecken.

8. Mähmaschine nach zumindest einem der Ansprüche 1 bis 7, dadurch gekennzeichnet, dass sich jedes Verbindungselement (28) aus einer Spannstange (52), zwei Unterlegscheiben (53) und einer Mutter (54) zusammensetzt.

9. Mähmaschine nach Anspruch 8, dadurch gekennzeichnet, dass der Flügel (31; 33) jedes Flansches (29; 30), der als Anlage für eine Unterlegscheibe (53) dient, im Bereich jeder Unterlegscheibe (53) eine Anlagefläche (57) in Form eines Teils einer Zylinderfläche hat und dass die Seite der Scheibe (53), die in Kontakt mit dieser Anlagefläche (57) kommen soll, ebenfalls die Form eines Teils einer Zylinderfläche mit zumindest im wesentlichen gleicher Abmessung wie jene der Anlagefläche (57) hat.

10. Mähmaschine nach Anspruch 9, dadurch gekennzeichnet, dass die Krümmung dieser Anlagefläche (57) in Form eines Teils einer Zylinderfläche zum anderen Flügel (32; 34) des jeweiligen Flansches (29; 30) gerichtet ist, der als Kontaktfläche (50; 51) zwischen zwei benachbarten Modulen (10) dient.

11. Mähmaschine nach einem der Ansprüche 8 bis 10, dadurch gekennzeichnet, dass ein Modul (10) zumindest einen Teil (59) aufweist, gegen den zumindest eine Seite (58) der jeweiligen Mutter (54) zur Anlage kommt, sodass die Drehung dieser Mutter (54) beim Einschrauben oder Herausschrauben der Zugstange (52) blockiert wird.

12. Mähmaschine nach Anspruch 11, dadurch gekennzeichnet, dass die Mutter (54) eine quadratische Form hat.

13. Mähmaschine nach zumindest einem der Ansprüche 8 bis 12, dadurch gekennzeichnet, dass der Kopf (56) der Zugstange (52) rund ist und einen zentralen sechseckigen Sitz (60) aufweist.

14. Mähmaschine nach zumindest einem der Ansprüche 1 bis 13, dadurch gekennzeichnet, dass jedes Modul (10) in an sich bekannter Weise ein Lagergehäuse (26), in welchem ein Schneidorgan (2-4; 3-4) drehbar geführt ist, und ein Zwischenstück (27) aufweist, das sich zwischen diesem Lagergehäuse (26) und dem Lagergehaüse (26) eines benachbarten Moduls (10) erstreckt, welches Zwischenstück (27) über zumindest einen Teil seiner Länge aus einem Rohrprofil (61) besteht, an dessen Hinterteil zumindest ein im wesentlichen parallel zur Längsachse (48) des Gehäuses (9) gerichteter Versteifungsflügel (62; 63) angebaut ist, und dass dieser Versteifungsflügel (62; 63) oder einer der Versteifungsflügel (62; 63) zumindest teilweise die Fortsetzung des Hinterteils des Verbindungsflügels (38; 40) oder eines der Verbindungsflügel (38; 40) der Flansche (29; 30) ist.

15. Mähmaschine nach Anspruch 14, dadurch gekennzeichnet, dass ein Versteifungsflügel (62) mit dem Oberteil des Rohrprofils (61) verbunden ist und dass dieser obere Versteifungsflügel (62) zumindest teilweise die Fortsetzung des Hinterteils des oberen Verbindungsflügels (38; 40) der Flansche (29; 30) ist.

16. Mähmaschine nach Anspruch 15, dadurch gekennzeichnet, dass der hintere Rand (64) des oberen Versteifungsflügels (62) im wesentlichen gleichlaufend mit dem hinteren Rand (65; 66) des oberen Verbindungsflügels (38; 40) der Flansche (29; 30) ist.

17. Mähmaschine nach Anspruch 15 oder 16, dadurch gekennzeichnet, dass ein Versteifungsflügel (63) mit dem unteren Teil des Rohrprofils (61) verbunden ist und dass dieser untere Versteifungsflügel (63) zumindest teilweise die Fortsetzung des Hinterteils des unteren Verbindungsflügels (39; 41) der Flansche (29; 30) ist.

18. Mähmaschine nach zumindest einem der Ansprüche 15 bis 17, dadurch gekennzeichnet, dass sich die hinteren Verbindungselemente (28, 52, 53, 54) in Draufsicht zumindest im wesentlichen vollständig unter den oberen Verbindungsflügel (38; 40) und unter dem oberen Versteifungsflügel (62) erstrecken.

**Claims**

1. A mower comprising rotary cutter members (2-4; 3-4) equipped with at least one cutting tool (4), at least one of said rotary cutter members (2-4; 3-4) being driven by means of transmission (14) housed in a casing (9) extending under the said rotary cutter members (2-4; 3-4), said casing (9) being made up in particular of modules (10) in which are guided in rotation some at least of the said rotary cutter members (2-4; 3-4), said modules (10) having a flange (29; 30) at each of their ends allowing them to be joined one to the other by means of assembly elements (28, 52, 53, 54) crossing said flanges (29; 30), characterised in that each flange (29; 30) is, in part at least, formed by two wings (31, 32; 33, 34) spaced one from the other along the longitudinal axis (48) of the casing (9) and directed transversally to this longitudinal axis (48), these two wings (31, 32; 33, 34) being joined together by at least one linking wing (38, 39; 40, 41) directed transversally in relation to the latter and connected to the body of the module (10).

2. A mower in accordance with claim 1, characterised in that the wings (31, 32; 33, 34) of each flange (29; 30) extend at least approximately perpendicularly to the longitudinal axis (48) of the casing (9).

3. A mower in accordance with claim 1 or 2, characterised in that the wings (31, 32; 33, 34) of each flange (29; 30) extend approximately vertically.

4. A mower in accordance with at least one of claims 1 to 3, characterised in that the linking wing (38, 39; 40, 41) or linking wings (38, 39; 40, 41) of each flange (29; 30) extend approximately horizontally.

5. A mower in accordance with at least one of claims 1 to 4, characterised in that the two wings (31, 32; 33, 34) of each flange (29; 30) are joined together by two linking wings (38, 39; 40, 41) of which one (38; 40) extends to the upper part and the other (39; 41) to the lower part of said wings (31, 32; 33, 34), the assembly elements (28, 52, 53, 54) extending between these two linking wings (38, 39; 40, 41).

6. A mower in accordance with claim 5, characterised in that when viewed in a horizontal direction perpendicular to the longitudinal axis (48) of the casing (9), the flanges (29; 30) have at their front and rear parts the form of a tube with an approximately quadrilateral cross-section.

7. A mower in accordance with at least one of claims 1 to 6, characterised in that the two wings (31, 32; 33, 34) of each flange (29; 30) are provided at their front and rear parts with a hole (42; 43) respectively (44; 45), said holes (42, 44; 43, 45) serving as a passage for the assembly elements (28, 52, 53, 54), the common axis (46) of the front holes (42; 43) and the common axis (47) of the rear holes (44; 45) extending at least approximately in the neighbourhood of the horizontal median plane (49) of the surface of contact (50; 51) of said flange (29; 30).

8. A mower in accordance with at least one of claims 1 to 7, characterised in that each assembly element (28) is made up of a tie-bolt (52), two washers (53) and a nut (54).

9. A mower in accordance with claim 8, characterised in that the wing (31; 33) of each flange (29; 30), which serves as support for a washer (53), has, in the region of each washer (53), a support face (57) in the form of a section of a cylindrical surface, and that the face of the washer (53), destined to come in contact with this support face (57), has equally the form of a section of a cylindrical surface having measurements at least approximately identical to that of said support face (57).

10. A mower in accordance with claim 9, characterised in that the curvature of said support face (57) in the form of a section of a cylindrical surface is directed towards the other wing (32; 34) of the respective flange (29; 30) serving as a contact face (50; 51) between two adjacent modules (10).

11. A mower in accordance with one of the claims 8 to 10, characterised in that a module (10) comprises at least one part (59) against which at least one side (58) of the respective nut (54) comes to abut, so as to block the rotation of this nut (54) when the tie-bolt (52) is tightened or loosened.

12. A mower in accordance with claim 11, characterised in that the nut (54) has a square shape.

13. A mower in accordance with at least one of claims 8 to 12, characterised in that the head (56) of the tie-bolt (52) is round and comprises a central hole (60) with six sides.

14. A mower in accordance with one at least of claims 1 to 13, characterised in that a module (10) comprises, in a manner known in itself, a case (26) in which is guided in rotation a cutter member (2-4; 3-4), and a spacer (27) extending between this case (26) and the case (26) of a neighbouring module (10), said spacer (27) being made up, for at least a part of its length, of a tubular profile (61) to the rear of which is joined at least one stiffening wing (62; 63) directed at least approximately parallel to the longitudinal axis (48) of the casing (9), and that this stiffening wing (62; 63) or one of the stiffening wings (62; 63) is, in part at least, the continuity of the rear part of the linking wing (38; 40) or of one of the linking wings (38; 40) of the flanges (29; 30).

15. A mower in accordance with claim 14, characterised in that one stiffening wing (62) is joined to the upper part of the tubular profile (61), and that this upper stiffening wing (62) is, in part at least, the continuation of the rear part of the upper linking wing (38; 40) of the flanges (29; 30).

16. A mower in accordance with claim 15, characterised in that the rear edge (64) of the upper stiffening wing (62) is approximately colinear with the rear edge (65; 66) of the upper linking wing (38; 40) of the flanges (29; 30).

17. A mower in accordance with claim 15 or 16, characterised in that one stiffening wing (63) is joined to the lower part of the tubular profile (61), and that this lower stiffening wing (63) is, in part at least, the continuation of the rear part of the lower linking wing (39; 41) of the flanges (29; 30).

18. A mower in accordance with one at least of the claims 15 to 18, characterised in that the rear assembly elements (28, 52, 53, 54) extend, seen from above, at least approximately entirely under the upper linking wings (38; 40) and under the upper stiffening wing (62).

## FIG.1

EP 0 239 515 B1

FIG. 2

EP 0 239 515 B1

FIG.3

FIG.4

FIG.5

EP 0 239 515 B1

FIG.6

EP 0 239 515 B1